**Europäisches Patentamt**

**European Patent Office**

**Office européen des brevets**

(19)

(11) Veröffentlichungsnummer : **0 229 790 B1**

(12) # EUROPÄISCHE PATENTSCHRIFT

(45) Veröffentlichungstag der Patentschrift :
06.03.91 Patentblatt 91/10

(51) Int. Cl.$^5$ : **G01J 3/433**

(21) Anmeldenummer : **86904087.3**

(22) Anmeldetag : **03.07.86**

(86) Internationale Anmeldenummer :
**PCT/DE86/00276**

(87) Internationale Veröffentlichungsnummer :
**WO 87/00272 15.01.87 Gazette 87/01**

(54) **Vorrichtung zur Messung von Atomspektren.**

(30) Priorität : 04.07.85 DE 3523874
18.06.86 DE 3620324

(43) Veröffentlichungstag der Anmeldung :
29.07.87 Patentblatt 87/31

(45) Bekanntmachung des Hinweises auf die
Patenterteilung :
06.03.91 Patentblatt 91/10

(84) Benannte Vertragsstaaten :
**CH DE FR GB IT LI NL SE**

(56) Entgegenhaltungen :
**AU-A- 251 689
US-A- 3 565 567
US-A- 3 676 004
US-A- 3 917 407
US-A- 3 957 375
Journal of Physics E: Scientific Instruments,
volume 12, Nr.9, September 1979 London (GB)
J.T.Lue: "Wavelength modulating spectrometer implemented with photovoltaic photodiodes", pages 833-836**

(56) Entgegenhaltungen :
**Applied Optics, volume 11, Nr.1, January 1979
New York (US) E.Ballik:"Elektrostatically
scanned reflectors for interferometer and laser applications", pages 125-134
Applied Optics, volume 7, Nr.10, Oktober 1968,
New York (US) A.Perregaux et al.:"A simple
technique for wavelength modulation of optical spectra", pages 2031-2035
Applied Optics, volume 11, Nr.4, April 1972,
New York (US) F.Schedewie et al.:"Digital
electronic light beam deflection used for spectral wavelength modulation", pages 957-958**

(73) Patentinhaber : **CAMMANN, Karl
Amalienstrasse 89
W-8000 München 40 (DE)**

(72) Erfinder : **CAMMANN, Karl
Amalienstrasse 89
W-8000 München 40 (DE)**

(74) Vertreter : **Wolgast, Rudolf, Dipl.-Chem. Dr. et
al
Dipl.-Phys. Jürgen Weisse Dipl.Chem. Dr.
Rudolf Wolgast Bökenbusch 41 Postfach 11 03
86
W-5620 Velbert 11 Langenberg (DE)**

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Technisches Gebiet

Die Erfindung betrifft die Messung von Atomspektren zwecks Bestimmung der Menge eines gesuchten Elements, dessen Atome in einem engen Spektralbereich absorbieren. Speziell betrifft die Erfindung das Problem der Untergrundkompensation bei solchen Messungen.

Zugrunde liegender Stand der Technik

Atome emittieren und absorbieren in bestimmten, schmalen Spektralbereichen (Spektrallinien). Dabei erfolgt eine Absorption bei solchen Wellenlängen, die von dem betreffenden Atom auch emittiert werden. Diese Erscheinung wird ausgenutzt, um die Menge oder Konzentration eines gesuchten Elements in der Probe zu bestimmen. Zu diesem Zweck wird die Probe "atomisiert". Es wird dafür gesorgt, daß die Atome des gesuchten Elements in einem Probenbereich im atomaren Zustand vorliegen. Diese Atomisierung kann in einer Flamme geschehen. Sehr gebräuchlich ist auch die Atomisierung in einer "Graphitrohrküvette". Bei letzterer wird eine Probe in ein Röhrchen aus Graphit eingebracht, das durch Hindurchleiten von elektrischem Strom unter Schutzgas auf eine hohe Temperatur aufgeheizt wird, bei welcher sich die Probe zersetzt und die Atome in dem Graphitröhrchen eine "Atomwolke" bilden.

Durch eine solche Atomwolke oder Flamme wird ein Meßlichtbündel gesandt, dessen Licht die Spektrallinien des gesuchten Elements, darunter eine Absorptionslinie, enthält. Die Atome des gesuchten Elements absorbieren solches Licht sehr stark, während dieses Meßlichtbündel von den Atomen der übrigen Bestandteile der Probe theoretisch nicht beeinflußt wird. Die Linien des Meßlichtbündels stimmen mit den Absorptionslinien der anderen Probenbestandteile nicht überein.

Diese idealen Verhältnisse liegen allerdings häufig nicht vor. Es tritt eine unspezifische, d.h. nicht durch die Atome des gesuchten Elements hervorgerufene Absorption auf, die als Untergrundabsorption bezeichnet wird. Diese Untergrundabsorption ist auf nicht atomisierte Bestandteile der Probe, nämlich Festkörperpartikel oder breitbandig absorbierende Moleküle, zurückzuführen. Bei hochempfindlichen Messungen spielt diese Untergrundabsorption eine nicht zu vernachlässigende Rolle und muß kompensiert werden.

Zu diesem Zweck ist es durch die DE-C-1 964 469 bekannt, das Meßlichtbündel, das von einer einzigen, als Linienstrahler ausgebildeten Strahlungsquelle ausgeht, Frequenz zu modulieren. Nach der DE-C-1 964 469 erfolgt diese Frequenzmodulation durch Ausnutzung des Zeeman-Effekts. Wenn ein magnetisches Feld an die linienemittierende Lichtquelle, beispielsweise eine Hohlkathodenlampe oder eine Hochfrequenz-Entladungslampe, angelegt wird, dann erfolgt durch das Magnetfeld eine Veränderung des quantenmechanisch zulässigen Energieniveaus der emittierenden Atome in der Lichtquelle. Infolgedessen wird jede emittierte Spektrallinie in mehrere Linien aufgespalten. Bei einem quer zur Richtung des Meßlichtbündels angelegten Magnetfeld erfolgt eine Aufspaltung in eine zentrale Komponente, die gegenüber der ursprünglichen Spektrallinie unverschoben aber parallel zur Richtung des Magnetfeldes polarisiert ist, und weiterhin in Komponenten, die wellenlängenmäßig symmetrisch zu der zentralen Komponente angeordnet und senkrecht zur Richtung des Magnetfeldes polarisiert sind. Bei einer Anordnung, bei welcher das Magnetfeld in Richtung des Meßlichtbündels verläuft, entfällt die zentrale unverschobene Komponente.

Durch die DE-A-2 165 106 ist ein Verfahren zur Untergrundkompensation bei der Atomabsorptions-Spektroskopie bekannt, bei welchem ebenfalls eine Frequenzmodulation der von der Lichtquelle emittierten Spektrallinie zum Zwecke der Untergrundkompensation erfolgt. Die DE-A-2 165 106 erwähnt als Mittel zur Frequenzmodulation der Emissionslinie auch den Doppler-Effekt. Wie eine Frequenzmodulation mittels des Doppler-Effekts praktisch realisiert werden soll, ist in der DE-A-2 165 106 jedoch nicht gesagt. Auch diese Druckschrift beschreibt als bevorzugtes Ausführungsbeispiel eine Linienaufspaltung mittels des Zeeman-Effekts.

Durch die AU-A-251 689 ist es bekannt, mittels Atomabsorptions-Spektroskopie (AAS) oder Atomfluoreszenz-Spektroskopie (AFS) das Profil einer Spektrallinie abzutasten, indem eine sehr schmale Emissions- oder Absorptionslinie gegenüber einer zu untersuchenden Absorptions- bzw. Emissionslinie größerer Breite verschoben wird. Diese Frequenzverschiebung kann nach der Lehre der AU-A-251 689 durch Anwendung des Doppler-Effekts, des Zeeman-Effekts oder des Stark-Effekts bewirkt werden. Bei einem in der AU-A-251 689 beschriebenen Ausführungsbeispiel wird der Partialdruck eines gesuchten Elements in einer Probe dadurch gemessen, daß die Absorptionslinie durch Anwendung des Zeeman-Effekts entweder auf die Lichtquelle oder auf die Probe abgetastet und zweidimensional die Absorption als Funktion der Wellenlänge aufgezeichnet wird, wobei zur Bestimmung der Menge oder des Partialdrucks des gesuchten Elements über das gesamte Wellenlängenprofil integriert wird.

Auch diese Druckschrift zeigt nicht im einzelnen, wie der Doppler-Effekt zur Wellenlängenmodulation ausgenutzt werden soll.

Durch die US-A-3 565 567 ist ein Atomabsorptions-Spektrometer bekannt, bei welchem eine Kompensation der Untergrundabsorption erfolgt. Dies geschieht bei der US-A-3 565 567 mittels einer ein Kontinuum aussendenden Lichtquelle und eines "oszillierenden Monochromators". Die Lichtquelle emittiert ein Kontinuum. Aus diesem Kontinuum blendet der Monochromator ein im Vergleich zu dem Kontinuum schmales Wellenlängenband aus, das im Bereich der zu messenden Absorptionslinie liegt. Dieses Wellenlängenband ist zwar schmal im Vergleich zu dem Kontinuum, ist aber wesentlich breiter als die Absorptionslinie. Durch periodische Verstellung des Monochromators wird das Wellenlängenband am Ausgang des Monochromators relativ zu der Absorptionslinie periodisch verschoben, so daß mit Sicherheit einmal die Absorptions-linie innerhalb dieses Wellenlängenbandes liegt und einmal die Absorptionslinie mit Sicherheit sich außerhalb des Wellenlängenbandes befindet. Am Detektor entsteht dann ein Wechselsignal, dessen Amplitude ein Maß für die Tiefe der Absorptionslinie darstellt.

Ein solches Verfahren setzt eine in dem Schwingbereich des Monochromators konstante Untergrundabsorption voraus. Es erfolgt keine Abtastung des Profils der Absorptionslinie und auch keine Abtastung der Wellenlängenabhängigkeit der Untergrundabsorption. Diese Anordnung ist daher nicht brauchbar bei strukturiertem Untergrund.

Die US-A-3 917 407 betrifft eine Anordnung zur Feinabstimmung eines Monochromators. Dabei treibt ein elektrischer Oszillator einen elektromechanischen Wandler, der über einen mechanischen Antrieb die Monochromator-Wellenlänge verändert. Ein auf das Lichtbündel von dem Monochromator ansprechender Detektor steuert einen Gleichspannungsverstärker, welcher die Vorspannung des elektromechanischen Wandlers verändert.

Die US-A-3 957 375 betrifft eine Phasenplatte zur Verwendung bei einem mit dem Zeeman-Effekt arbeitenden Atomabsorptions-Spektrometer. Durch ein konstantes magnetisches Feld werden die von einer linienemittierenden Lichtquelle ausgesandten Spektrallinien durch den Zeeman-Effekt aufgespalten. Diese Aufspaltung erfolgt in rechtwinklig zueinander polarisierte Komponenten. Eine Komponente ist gegenüber der Resonanzlinie des betreffenden Elements unverschoben, während die anderen Komponenten mit anderer Polarisation eine Wellenlängenverschiebung erfahren. Es sollen nun abwechselnd die unverschobene Komponente und die verschobenen Komponenten durch einen Probenraum mit atomisierter Probe auf einen Detektor fallen. Zu diesem Zweck ist eine Phasenplatte mit einem nachgeschalteten linearen Polarisator vorgesehen.

Die Phasenplatte wird durch einen Magneten periodisch im Wechsel zwischen Probenmessung und Untergrundmessung gedrückt, so daß eine periodische Doppelbrechung auftritt. Dadurch werden abwechselnd die unverschobene Komponente oder die verschobenen Komponenten zum Probenraum durchgelassen. Diese Phasenplatte ersetzt praktisch einen rotierenden Polarisator.

Offenbarung der Erfindung

Der Erfindung liegt die Aufgabe zugrunde, eine Kompensation der Untergrundabsorption bei der Atomabsorptions- oder Atomfluoreszenz-Spektroskopie durch Frequenzmodulation unter Ausnutzung des Doppler-Effekts vorzunehmen.

Eine weitere Aufgabe der Erfindung besteht darin, die Informationen über die Untergrundabsorption zu verbessern und damit eine genauere Untergrundkompensation zu ermöglichen.

Zur Lösung dieser Aufgabe sieht die Erfindung eine Vorrichtung zur Messung von Atomabsorptions-Spektren vor, durch welche die Menge eines gesuchten Elements, dessen Atome in einem engen Spektralbereich (Absorptionslinie) absorbieren, in einer Probe bestimmt werden sollen. Diese Vorrichtung enthält eine Atomisierungseinrichtung zum Atomisieren einer Probe in einem Probenbereich, derart, daß das gesuchte Element in diesem Probenbereich in atomarem Zustand vorliegt. Eine linienemittierende Lichtquelle, vorzugsweise eine Hohlkathodenlampe, dient zur Erzeugung eines Meßlichtbündels mit einem im Vergleich zu der Breite der Absorptionslinie schmalbandigen Wellenlängenprofil. Die Wellenlänge des Wellenlängenprofils des Meßlichtbündels liegt wenigstens in der Nähe der Absorptionslinie. Es sind Mittel zum Hindurchleiten dieses Meßlichtbündels durch den Probenbereich vorgesehen. Ein Detektor ist von dem Meßlichtbündel beaufschlagt. Die Intensität des Meßlichtbündels am Detektor hängt von der Absorption ab, welche das Meßlichtbündel in dem Probenbereich erfährt. Der Detektor liefert ein entsprechendes Meßsignal. Frequenzmodulationsmittel dienen zur Frequenzmodulation des durch den Probenraum tretenden Meßlichtbündels unter Ausnutzung des Doppler-Effekts, so daß die Überlappung der Wellenlängenprofile von Meßlichtbündel und Absorptionslinie variiert wird. Signalverarbeitungsmittel erzeugen einen untergrundkompensierten Meßwert für die besagte Menge des gesuchten Elements aus dem bei der Frequenzmodulation erhaltenen, variierten Meßsignal.

Dabei enthalten erfindungsgemäß die Frequenzmodulationsmittel zwischen linienemittierender Lichtquelle und Probenbereich angeordnete Mittel zur Erzeugung einer periodischen Änderungsrate der optischen Weglänge. Durch die Änderungsrate erfolgt eine stetige Variation der Lage des Wellenlängenprofils des Meßlichtbündels zu der Lage der Absorptionslinie über einen die Breite der Absorptionslinie deutlich überschreitenden Abtastbereich, so daß über eine definierte Bandbreite neben der Absorptionslinie ein Untergrundspektrum ermittelt wird. Die Signalverarbeitungsmittel enthalten Mittel zur Korrektur der Messung im Bereich der Absorptionslinie um einen aus dem Untergrund-Absorptionsspektrum gewonnenen Untergrundmeßwert.

Nach der Erfindung wird somit die Frequenzmodulation des Meßlichtbündels in an sich bekannter Weise durch den Doppler-Effekt bewirkt. Im Gegensatz zu dem Stand der Technik, der zwar den Doppler-Effekt erwähnt, jedoch nicht angibt, wie die Frequenzmodulation mittels des Doppler-Effekts tatsächlich erzielbar sein soll, gibt die Erfindung die Lehre, zwischen der (stillstehenden) Lichtquelle und dem (ebenfalls stillstehenden) Probenbereich Mittel zur Erzeugung einer periodischen Änderungsrate der optischen Weglänge vorzusehen. Zur Erzeugung des Doppler-Effekts ist es nicht erforderlich, Lichtquelle und Probenbereich zueinander zu bewegen. Vielmehr ist es möglich, den Doppler-Effekt dadurch zu "simulieren", daß die optische Weglänge zwischen Lichtquelle und Probenbereich mit einer bestimmten Änderungsrate verändert wird. Das ist möglich, wenn die Variation der Änderungsrate periodisch erfolgt.

Durch eine solche periodische Variation der Änderungsrate der optischen Weglänge kann die Absorptionslinie und der benachbarte Untergrund abgetastet werden, ohne daß die Lichtquelle oder Absorptionslinie und Untergrund dabei gestört werden können. Bei einer Abtastung unter Ausnutzung des Zeeman-Effektes kann eine Frequenzmodulation des Meßlichtbündels dadurch erfolgen, daß ein Magnetfeld an die Lichtquelle angelegt wird. Das birgt die Gefahr in sich, daß die Gasentladung der linienemittierenden Lichtquelle gestört wird. Es kann auch ein Magnetfeld an den Probenbereich angelegt werden, so daß eine Aufspaltung der Absorptionslinie erfolgt. Ein solches Magnetfeld kann aber auch den Untergrund beeinflussen, so daß eine einwandfreie Berücksichtigung des Untergrundes, insbesondere wenn es sich um strukturierten Untergrund handelt, nicht möglich ist. Der Doppler-Effekt mittels zwischen der zwischen Lichtquelle und Probenbereich angeordneten weglängenveränderter Mittel beeinflußt weder die Lichtquelle noch die Probe.

Es wird dann möglich, das Wellenlängenprofil nicht nur der Absorptionslinie, sondern auch des Untergrunds im Bereich der Absorptionslinie abzutasten. Es erfolgt hier eine echte Abtastung des Wellenlängenprofils mittels einer schmalbandigen Emissionslinie, deren Wellenlängenprofil schmalbandig gegen die Breite der Absorptionslinie ist. Auf diese Weise wird nicht nur ein summarischer Meßwert erhalten, sondern eine Information über den genauen Verlauf der Absorptionslinie und des Untergrunds im Bereich der Absorptionslinie. Aus diesen Informationen können die Signalverarbeitungsmittel genauere Aussagen über die Konzentration des gesuchten Elements in der Probe gewinnen, als dies mit bekannten Methoden möglich ist.

Ausgestaltungen der Erfindung sind Gegenstand weiterer Patentansprüche.

## Kurze Beschreibung der Zeichnungen

Einige Ausführungsbeispiele der Erfindung sind nachstehend unter Bezugnahme auf die zugehörigen Zeichnungen näher erläutert.

Fig. 1 zeigt schematisch eine Meßanordnüng zur Erfassung der Untergrundabsorption bei der Atomabsorptions-Spektroskopie.

Fig. 2 zeigt schematisch ein Absorptionsspektrum mit Untergrundabsorption, wobei die Untergrundabsorption Rotationsbanden von Molekülen enthält.

Fig. 3 zeigt eine Ausführung einer Vorrichtung zur Erzeugung einer Frequenzmodulation mittels des Doppler-Effekts.

Fig. 4 zeigt eine andere Ausführung des Schwingers bei der Ausführung von Fig. 3.

Fig. 5 zeigt eine weitere Ausführung einer Vorrichtung zur Erzeugung einer Frequenzmodulation mittels des Doppler-Effekts.

Fig. 6 zeigt schematisch eine Abwandlung der beweglichen reflektierenden Fläche und ihres Antriebs.

Fig. 7 ist eine Seitenansicht von Fig. 6.

Fig. 8 zeigt schematisch eine weitere Ausführung einer Vorrichtung zur Erzeugung einer Frequenzmodulation mittels des Doppler-Effekts.

Fig. 9 zeigt schematisch eine bevorzugte Ausführungsform von Fig. 8, bei welcher eine Frequenzmodulation mittels des Doppler-Effekts durch einen umlaufenden Spiegelträger erreicht wird.

Fig. 10 ist eine Abwicklung der Mantelfläche des Spiegelträgers von Fig. 9.

Fig. 11 zeigt schematisch eine weitere, bevorzugte Ausführungsform einer Vorrichtung zur Erzeugung einer Frequenzmodulation mittels des Doppler-Effekts, wobei eine Änderung der optischen Weglänge durch ein Material hervorgerufen wird, dessen Brechungsindex durch eine angelegte Spannung veränderbar ist.

## Bevorzugte Ausführungen der Erfindung

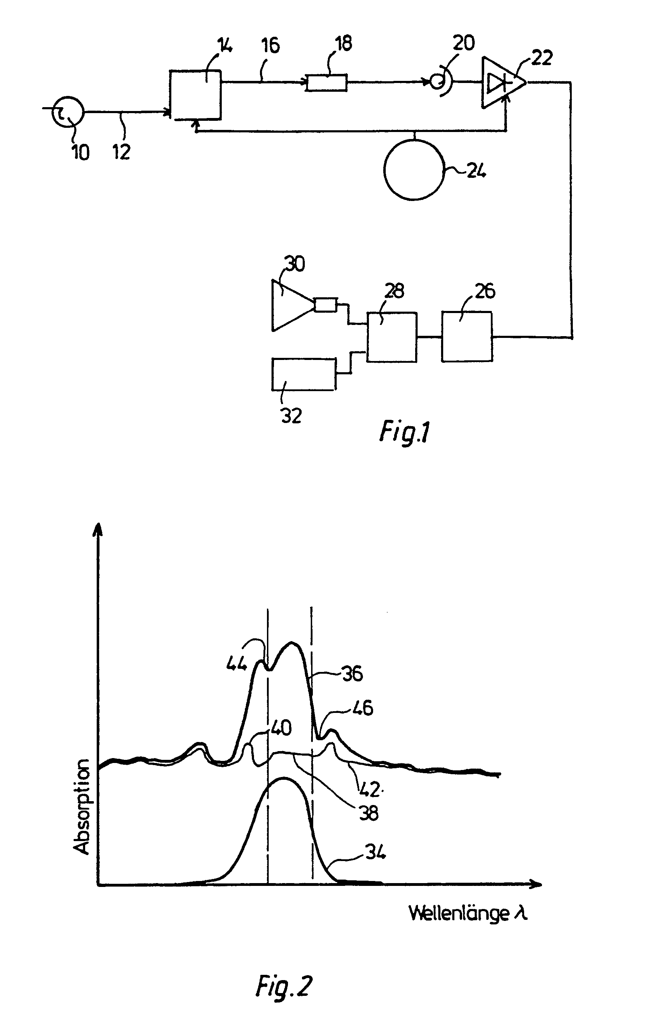

In Fig. 1 geht von einer Hohlkathodenlampe 10 ein Meßlichtbündel 12 aus. Das Meßlichtbündel 12 wird durch eine frequenzmodulierende Vorrichtung 14 der noch zu beschreibenden Art unter Ausnutzung des Doppler-Effekts frequenzmoduliert. Das frequenz-modulierte Meßlichtbündel 16 durchsetzt einen Probenbereich 18. Bei diesem Probenbereich kann es sich um eine bekannte Graphitrohrküvette handeln. In dem Probenbereich liegt die Probe überwiegend in atomarer Form vor. Durch Festkörperanteile und nicht zersetzte Moleküle kann jedoch eine Untergrundabsorption auftreten. Die Absorption des frequenzmodulierten Meßlichtbündels 16 wird durch einen photoelektrischen Detektor 20, beispielsweise einen Photomultiplier, erfaßt. Das Ausgangssignal des Detektors 20 liegt an einem Lock-in-Verstärker 22. Der Lock-in-Verstärker wird gemeinsam mit der frequenzmodulierenden Vorrichtung 14 von einem Oszillator 24 gesteuert.

Das Ausgangssignal des Lock-in-Verstärkers 22 wird in einem Rechner 26 digitalisiert. Das digitalisierte Ausgangssignal ist auf einen Speicher 28 geschaltet und wird dort in Abhängigkeit von der Zeit abgespeichert. Die gespeicherten Ausgangssignale werden dann auf einen Bildschirm 30 angezeigt oder durch einen Plotter 32 ausgedruckt.

In Fig. 2 ist mit 34 ein Absorptionsspektrum dargestellt, wie man es erhalten würde, wenn nur die Atome eines bestimmten gesuchten Elements im Probenraum vorhanden wären und keine Störungen durch Untergrundabsorption eintreten würde. Diese idealisierten Verhältnisse sind in der Praxis nicht gegeben. Das Spektrum hat einen Verlauf, wie er etwa durch Kurve 36 dargestellt ist. Dem Absorptionsspektrum des gesuchten Elements ist eine Untergrundabsorption überlagert, die durch die Kurve 38 in Fig. 2 dargestellt ist. Bei dem dargestellten Beispiel enthält die Untergrundabsorption Unregelmäßigkeiten wie bei 40 und 42 dargestellt, die auf Rotationsspektren der im Probenraum vorhandenen Moleküle zurückzuführen sind.

Dadurch, daß nicht nur die Werte der Gesamtabsorption und der Untergrundabsorption bei bestimmten vorgegebenen Wellenlängen gemessen werden, sondern der Kurvenverlauf betrachtet wird, können Fehler vermieden werden, die dadurch entstehen, daß die Untergrundabsorption gerade bei einer Rotationslinie eines in der Matrix enthaltenen Moleküls gemessen wird. Es ist zu beachten, daß in der Praxis bei hochempfindlichen Messungen die Untergrundabsorption ein Vielfaches der spezifischen Absorption des gesuchten Elements sein kann.

Die Absorptionsbande des gesuchten Elements, die hier mit Kurve 34 als relativ stark dargestellt ist, kann durchaus in der Größenordnung solcher Unregelmäßigkeiten der Untergrundabsorption liegen, wie sie bei 40 und 42 dargestellt sind. Dies kann aus einer Betrachtung des Signalverlaufs in Abhängigkeit von der Wellenlänge bei der Frequenz-modulation des Meßlichtbündels 16 berücksichtigt werden. Eine solche Berücksichtigung kann auch in einem Rechner durch geeignete Signalverarbeitung erfolgen. Beispielsweise kann für die Messung ein Bereich um die mittlere Wellenlänge der Absorptionsbande ausgeblendet werden, der zwischen den nächstliegenden Unregelmäßigkeiten des Kurvenverlaufs in Abweichung von einer idealen Glockenkurve, die hier zwischen den Punkten 44 und 46 liegt, wie durch die gestrichelten Linien in Fig. 2 angedeutet ist.

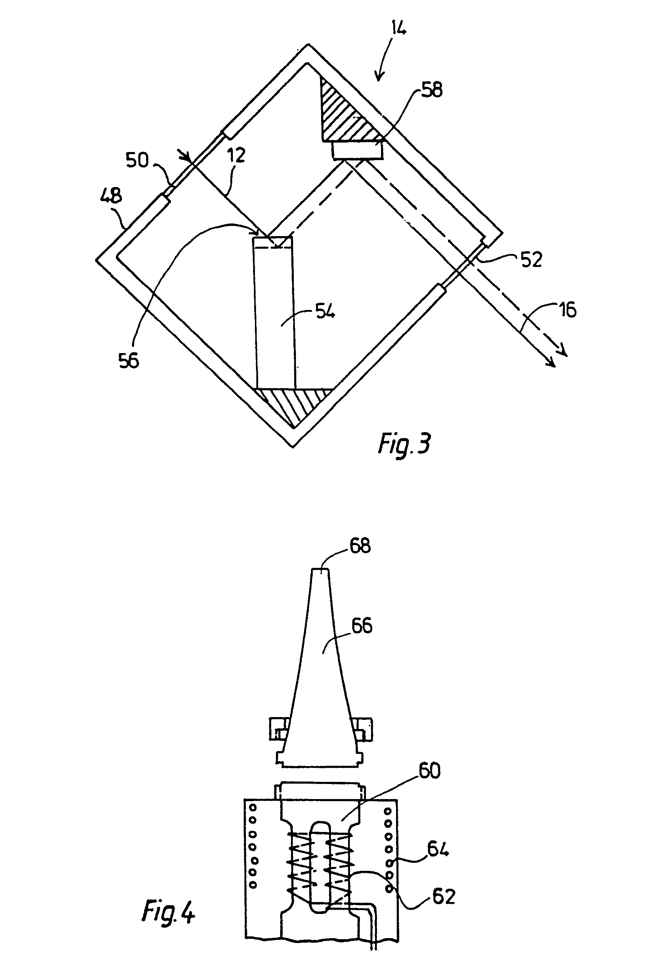

In Fig. 3 ist ein Ausführungsbeispiel einer frequenzmodulierenden Vorrichtung 14 dargestellt. Ein Gehäuse 48 von rechteckigem Querschnitt weist auf zwei gegenüberliegenden Seitenwänden seitlich gegeneinander versetzte Fenster 50 und 52 auf. In dem Gehäuse 48 ist ein Schwinger 54 angeordnet, der hier von einem prismatischen piezoelektrischen Körper gebildet ist, an den (in nicht dargestellter Weise) ein periodisches Signal mit hoher Frequenz angelegt werden kann. Die Stirnfläche 56 dieses Schwingers ist verspiegelt. Ein zu der Stirnfläche paralleler feststehender Spiegel 58 ist der Stirnfläche 56 zugewandt im Gehäuse 48 angeordnet. Das Meßlichtbündel 12 tritt durch das Fenster 50 in das Gehäuse 48 der Vorrichtung 14 ein, wird an der verspiegelten Stirnfläche des Schwingers 54 auf den Spiegel 58 reflektiert und verläßt das Gehäuse 48 parallel zur Einfallsrichtung durch das Fenster 52 als frequenzmoduliertes Meßlichtbündel 16.

Wie aus Fig. 3 ersichtlich ist, ändert der Schwinger 54 bei Anlegen einer elektrischen Spannung seine Länge. Dadurch wird eine Änderungsrate der optischen Weglänge des Meßlichtbündels 12, 16 zwischen den Fenstern 50 und 52 hervorgerufen. Diese Änderungsrate wirkt vom Probenraum 18 aus gesehen wie eine entsprechende hin- und hergehende Bewegung der Lichtquelle, so daß eine Frequenzmodulation des Meßlichtbündels 16 infolge des Doppler-Effekts eintritt.

In Fig. 4 ist eine abgewandelte Ausführung des Schwingers dargestellt. Statt eines piezoelektrischen Schwingers 54 ist ein magnetostriktiver Schwinger 60 vorgesehen, der mit einer Feldspule 62 versehen ist. Durch den in der Feldspule fließenden Strom wird ein Magnetfeld erzeugt, das den magnetostriktiven Schwinger 60, der aus Nickel bestehen kann, entsprechend der Feldstärke verkürzt. Zur Erzielung höherer Amplituden ist die Anordnung mit einer Kühlung 64 versehen. Auf den Schwinger 60 ist ein amplitudenverstärkender sich verjüngender Körper 66 aufgesetzt, dessen schmale Stirnfläche 68 verspiegelt ist. Die verspiegelte Stirnfläche 68 ersetzt die Stirnfläche 56 des Schwingers 54.

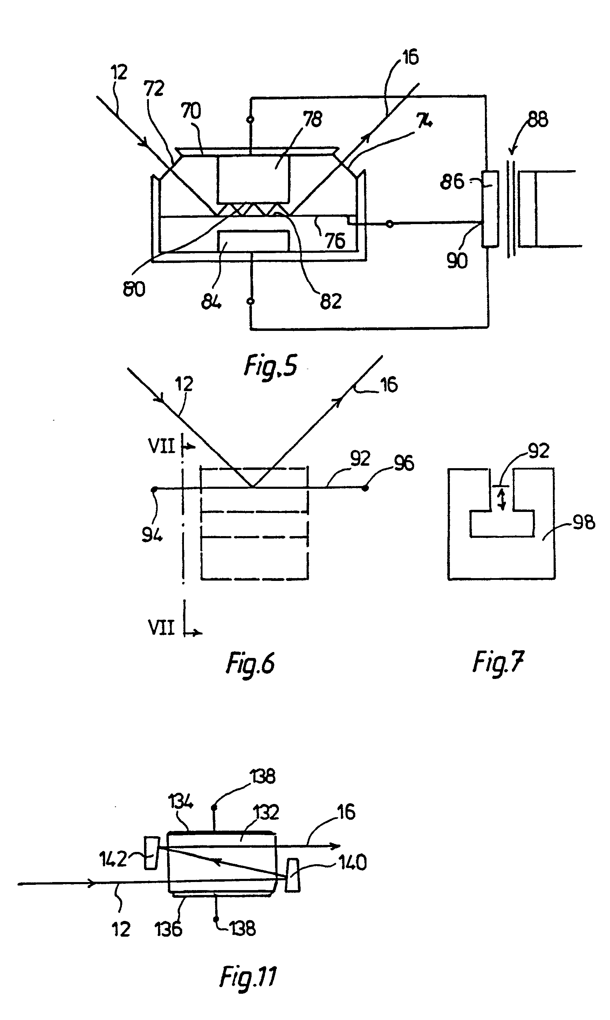

Bei der Ausführung nach Fig. 5 ist mit 70 ein Gehäuse bezeichnet, das ein Eintrittsfenster 72 und ein Austrittsfenster 74 aufweist. In das Gehäuse ist eine dünne Membran 76 eingespannt, die auf der in Fig. 5 oberen Seite 82 verspiegelt ist. Oberhalb der Membran sitzt eine Kondensatorplatte 78 in Form eines Blocks mit einer verspiegelten Unterseite 80. Das Meßlichtbündel 12 tritt durch das Eintrittsfenster 72 in das Gehäuse 70 ein, wird zwischen den Verspiegelungen 80 und 82 der Kondensatorplatte 78 und der Membran 76 mehrfach hin und her reflektiert und verläßt das Gehäuse 70 als frequenzmoduliertes Meßlichtbündel 16 durch das Austrittsfenster 74. In Fig. 5 unterhalb der Membran ist eine weitere Kondensatorplatte 84, ebenfalls in Form eines Blocks, angeordnet. Die beiden Kondensatorplatten 78 und 84 liegen an den Enden der Sekundärwicklung 86 eines Gegentakttransformators 88. Die Membran 76 ist mit der Mittenanzapfung 90 des Gegentakttransformators 88 verbunden.

Wenn der Gegentakttransformator 88 mit einer Wechselspannung relativ hoher Frequenz erregt wird, wirkt auf die Membran 76 ein elektrisches Wechselfeld, wodurch die Membran in entsprechende Schwingungen versetzt wird. Die Evakuierung des Gehäuses 70 sorgt dafür, daß diese Schwingungen nicht durch die Luft im Gehäuse gedämpft wird. Infolge der Schwingungen treten periodische Änderungsraten der optischen Weglänge zwischen den Fenstern 72 und 74 auf. Das bewirkt eine Frequenzverschiebung in dem Meßlichtbündel 16 infolge des Doppler-Effekts. Da das Meßlichtbündel mehrfach an der durch die Verspiegelung 82 gebildeten beweglichen reflektierenden Oberfläche reflektiert wird, wird der Doppler-Effekt vermehrfacht.

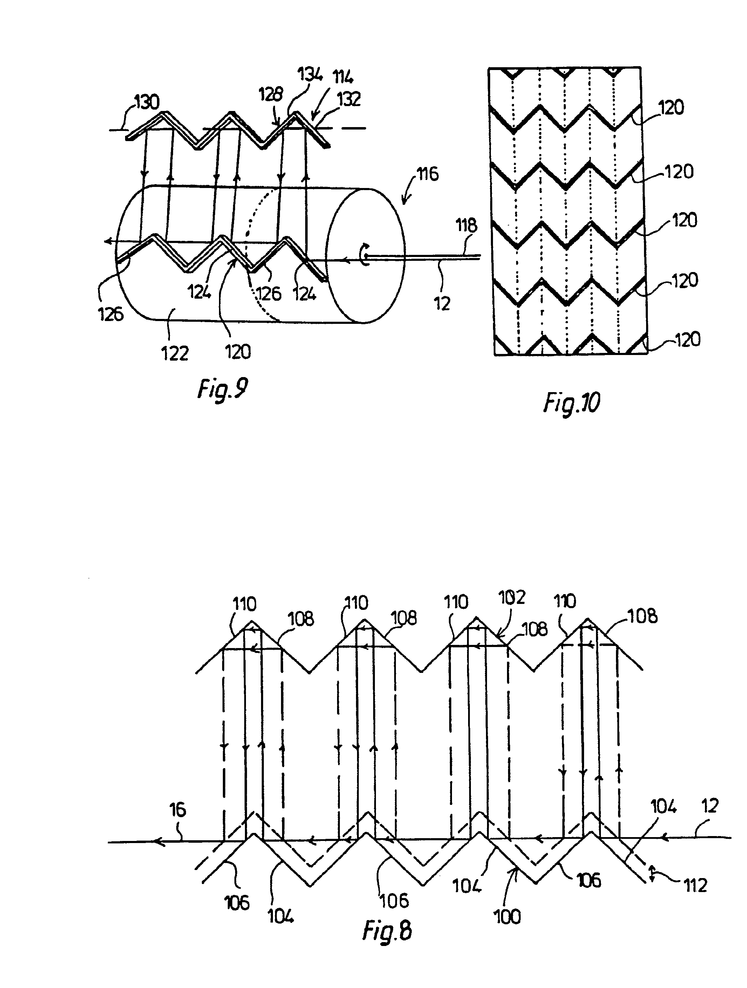

Bei der Ausführung nach Fig. 6 und 7 dient als bewegliche reflektierende Fläche ein Band 92, welches entweder metallisch ist oder aus einer metallisch beschichteten Kunststoffolie besteht. Durch dieses Band wird über Klemmen 94 und 96 ein Wechselstrom mit hoher Frequenz geschickt. Wie aus Fig. 7 ersichtlich ist, befindet sich das Band 92 im Luftspalt eines Magneten 98. Dadurch wird das Band in Schwingungen versetzt, wie in Fig. 7 durch den Doppelpfeil angedeutet ist. Das Band 92 wirkt als bewegliche reflektierende Oberfläche, über welche das Meßlichtbündel 12 bzw. 16 geleitet wird.

Fig. 8 zeigt eine Anordnung, bei welcher ein beweglicher Spiegelträger 100 und ein unbeweglicher Spiegelträger 102 vorgesehen sind. Der bewegliche Spiegelträger weist eine Mehrzahl von Spiegeln 104 auf, die unter einem Winkel von 45° zur Einfallsrichtung des Meßlichtbündels 12 geneigt sind, sowie eine Mehrzahl von Spiegeln 106, die sich an die Spiegel 104 anschließen und mit der Einfallsrichtung des Meßlichtbündels 12 einen Winkel von 225° bilden. Die Spiegel 104 und 106 des Spiegelträgers 100 bilden somit eine zick-zack-förmige Spiegelanordnung. In entsprechender Weise enthält der feststehende Spiegelträger 102 Spiegel 108, die parallel zu den Spiegeln 104 liegen sowie Spiegel 110, die parallel zu den Spiegeln 106 angeordnet sind. Auch die Spiegel 108 und 110 schließen aneinander an und bilden miteinander rechte Winkel. Der bewegliche Spiegelträger 100 führt eine Schwingbewegung aus, wie durch den Doppelpfeil 112 dargestellt ist.

Wie aus Fig. 8 ersichtlich ist, wird das Meßlichtbündel 12 von dem ersten Spiegel 104 um 90° abgelenkt, wird dann von zwei benachbarten Spiegeln 108 und 110 des feststehenden Spiegelträgers 102 reflektiert, anschließend von zwei Spiegeln 106 und 104 des beweglichen Spiegelträgers usw., bis das Meßlichtbündel 12 schließlich als frequenzmoduliertes Meßlichtbündel 16 von dem letzten Spiegel 106 des beweglichen Spiegelträgers 100 wieder in die Einfallsrichtung reflektiert wird.

Wie aus der gestrichelten Lage des beweglichen Spiegelträgers 100 und den zugehörigen Strahlengängen ersichtlich ist, erfolgt auch hier eine periodische Änderung der optischen Weglänge zwischen Eintrittspunkt und Austrittspunkt, die zu einer Frequenzverschiebung mittels des Doppler-Effekts führt. Auch hier wird der Doppler-Effekt infolge mehrfacher Reflexion an dem beweglichen Spiegelträger 100 vermehrfacht.

Bei der Ausführung nach Fig. 9 und 10 enthalten die Mittel zur Erzeugung einer Änderungsrate der optischen Weglänge einen feststehenden Spiegelträger 114 und einen relativ zu dem feststehenden Spiegelträger 114 umlaufenden Spiegelträger 116. Die Spiegelträger weisen, wie noch erläutert wird, reflektierende Flächen auf, wobei das Meßlichtbündel 12 über die reflektierenden Flächen des umlaufenden und des feststehenden Spiegelträgers 116 bzw. 114 geleitet ist. Die reflektierenden Flächen sind so angeordnet, daß während des Umlaufs das Meßlichtbündel 12 periodisch während erster Zeitintervalle eine Änderungsrate der optischen Weglänge erfährt und während zweiter Zeitintervalle unbeeinflußt durchgelassen wird. Zu diesem Zweck fällt das Meßlichtbündel 12 parallel zur Umlaufachse 118 des umlaufenden Spiegelträgers 116, dessen bewegte Spiegelflächen 45° zur Drehachse und immer senkrecht zur Zylinderoberfläche stehen, ein. Der umlaufende Spiegelträger 116 besitzt langgestreckt zylindrische Grundform. Auf dem Umfang des umlaufenden Spiegelträgers 116 sind als bewegliche reflektierende Flächen eine Mehrzahl von Spiegelfolgen 120 angeordnet, von denen in Fig. 9 der Einfachheit halber nur eine dargestellt ist. Die Spiegelfolgen 120 erstrecken sich jeweils längs einer Mantellinie des Zylinders. Wie aus der Abwicklung von Fig. 10 ersichtlich ist, sind die Spiegelfolgen in Umfangsrichtung im Abstand voneinander angeordnet. Jede Spiegelfolge besteht (ähnlich wie bei der Anordnung nach Fig. 8) aus einer Mehrzahl von Spiegeln 124, 126, die sich aneinander anschließen und die abwechselnd einen Winkel von 45° und 225° mit der Mantellinie des Zylinders 122 bilden. Der feststehende Spiegelträger 114 weist als feststehende reflektierende Flächen eine Spiegelfolge 128 auf. Die Spiegelfolge 128 erstreckt sich längs einer parallel zu der Umlaufachse 118 des umlaufenden Spiegelträgers 116 verlaufenden gedachten Linie 130. Sie besteht ähnlich wie der feststehende Spiegelträger 102 von Fig. 8 aus einer Mehrzahl von Spiegeln 132, 134, die sich aneinander anschließen und die abwechselnd einen Winkel von 45° und 225° mit der besagten gedachten Linie 130 bilden.

Das Meßlichtbündel wird während der ersten Zeitintervalle von einem ersten Spiegel 124 einer Spiegelfolge 120 des umlaufenden Spiegelträgers 116 auf einen Spiegel 132 des feststehenden Spiegelträgers 114 reflektiert. Dann erfährt es abwechselnd je zwei Reflexionen an Spiegeln 132, 134 des feststehenden Spiegelträgers 114 und an Spiegeln 126, 124 des umlaufenden Spiegelträgers 116. Schließlich wird es von einem letzten Spiegel 126 der Spiegelfolge 120 des umlaufenden Spiegelträgers 116 in eine zur Umlaufachse 118 parallele Richtung ausgespiegelt. Der Strahlengang ist ähnlich wie bei der Anordnung nach Fig. 8. Es findet jedoch keine Schwingbewegung des beweglichen Spiegelträgers 120 statt sondern eine Umlaufbewegung. Während der zweiten Zeitintervalle geht das Meßlichtbündel 112 zwischen den Spiegelfolgen 120 des umlaufenden Spiegelträgers 116 gerade hindurch.

Fig. 11 zeigt ein weiteres bevorzugtes Ausführungsbeispiel der vorliegenden Erfindung. Bei dieser Ausführung ist im Strahlengang des Meßlichtbündels 12 bzw. 16 ein Kristall, beispielsweise LiNbO$_3$, angeordnet. Der Kristall 132 ist zwischen zwei Feldplatten 134 und 136 angeordnet, die mit Anschlußklemmen 138 bzw. 140 verbunden sind. Das Meßlichtbündel 12 tritt durch den Kristall 132 hindurch, wird von einem feststehenden Spiegel 140 wieder in den Kristall 132 hineinreflektiert und fällt auf einen feststehenden Spiegel 142, der eintrittsseitig neben dem einfallenden Meßlichtbündel 12 angeordnet ist. Von dem Spiegel 142 wird das Meßlichtbündel nochmals durch den Kristall 132 hindurchgeleitet und verläßt den Kristall als Meßlichtbündel 16. Das Meßlichtbündel wird also in einem Z-förmigen Strahlengang mehrfach durch den Kristall 132 geleitet.

Das Material des Kristalls 132 weist eine elektrooptische Eigenschaft auf, die an sich bekannt ist :

Legt man ein elektrisches Feld an die Klemmen 138, so ändert sich der Brechungsindex im Kristall 132 proportional zu der Feldstärke. Wenn man eine dreieck- oder sinusförmige Wechselspannung im Mega-Hertz-Bereich anlegt, so variiert der Brechungsindex im Kristall entsprechend schnell. Dies bedingt eine entsprechende Änderungsrate der optischen Weglänge im Kristall 132. Die optische Weglänge ist definiert als Produkt aus geometrischem Weg und Brechungsindex des Mediums, in welchem das Licht fortschreitet. Bei entsprechend schnellen Änderungen des Brechungsindex ergibt sich dann eine hohe Änderungsrate der optischen Weglänge, was einer schnellen Spiegelbewegung entspricht. Auch hier tritt eine Frequenzverschiebung durch den Doppler-Effekt auf. Dies wird ohne mechanische Bewegung erreicht.

## Ansprüche

1.Vorrichtung zur Messung von Atomabsorptions-Spektren zwecks Bestimmung der Menge eines gesuchten Elements, dessen Atome in einem engen Spektralbereich (Absorptionslinie) absorbieren, in einer Probe, enthaltend

(a) eine Atomisierungseinrichtung zum Atomisieren der Probe in einem Probenbereich, derart, daß das gesuchte Element in diesem Probenbereich (18) in atomarem Zustand vorliegt,

(b) eine linienemittierende Lichtquelle (10) zur Erzeugung eines Meßlichtbündels mit einem im Vergleich zu der Breite der Absorptionslinie schmalbandigen Wellenlängenprofil, dessen Wellenlänge wenigstens in der Nähe der Absorptionslinie liegt,

(c) Mittel zum Hindurchleiten dieses Meßlichtbündels durch den Probenbereich (18),

(d) einen Detektor (20), der von dem Meßlichtbündel beaufschlagt ist, dessen Intensität am Detektor von der Absorption abhängt, welche das Meßlichtbündel in dem Probenbereich (18) erfährt, und der ein entsprechendes Meßsignal liefert,

(e) Frequenzmodulationsmittel (14) zur Frequenzmodulation des durch den Probenraum (18) tretenden Meßlichtbündels unter Ausnutzung des Doppler-Effektes, so daß die Überlappung der Wellenlängenprofile von Meßlichtbündel und Absorptionslinie variiert wird und

(f) Signalverarbeitungsmittel (26, 28) zur Erzeugung eines untergrundkompensierten Meßwertes für die besagte Menge des gesuchten Elements aus dem bei der Frequenzmodulation erhaltenen, variierten Meßsignal, **dadurch gekennzeichnet, daß**

(g) die Frequenzmodulationsmittel zwischen linienemittierender Lichtquelle (10) und Probenbereich (18) angeordnete Mittel (14) zur Erzeugung einer periodischen Änderungsrate der optischen Weglänge enthalten, welche eine dazu proportionale Wellenlängenänderung des Meßlichtbündels bewirkt,

(h) wobei die Änderungsrate eine stetige Variation der Lage des Wellenlängenprofils des Meßlichtbündels zu der Lage der Absorptionslinie über einen die Breite der Absorptionslinie deutlich überschreitenden Abtastbereich bewirkt, so daß über eine definierte Bandbreite neben der Absorptionslinie ein Untergrundspektrum ermittelt wird, und daß

(i) die Signalverarbeitungsmittel Mittel zur Korrektur der Messung im Bereich der Absorptionslinie um einen aus dem Untergrund-Absorptionsspektrum gewonnenen Untergrundmeßwert enthalten.

2. Vorrichtung nach Anspruch 1, **dadurch gekennzeichnet, daß** die Mittel (14) zur Erzeugung einer Änderungsrate der optischen Weglänge wenigstens eine bewegliche reflektierende Fläche (56, 68, 82, 92, 104, 124, 126) enthalten.

3. Vorrichtung nach Anspruch 1, **dadurch**

gekennzeichnet, daß die Mittel zur Erzeugung einer Änderungsrate der optischen Weglänge

a) ein im Strahlengang des Meßlichtbündels (12) angeordnetes, für das Meßlichtbündel durchlässiges optisches Material (132) mit einem durch ein angelegtes Steuersignal steuerbaren Brechungsindex und

b) Mittel (134, 136) zum Anlegen eines periodischen Steuersignals an dieses Material (132) enthalten.

4. Vorrichtung nach Anspruch 3, **dadurch gekennzeichnet, daß** der Brechungsindex des Materials (132) durch ein angelegtes Signal veränderbar ist.

5. Vorrichtung nach Anspruch 4, **dadurch gekennzeichnet, daß** der Strahlengang des Meßlichtbündels durch einfallseitig und ausfallseitig von dem Material (132) mit veränderbarem Brechungsindex angeordnete Spiegel (142, 140) mehrfach durch das Material (132) hindurchgeführt ist.

6. Vorrichtung nach Anspruch 2, **dadurch gekennzeichnet, daß** die Mittel zur Erzeugung einer Änderungsrate der optischen Weglänge

a) eine erste reflektierende Fläche (56) enthalten, die auf der Stirnfläche eines Schwingers (54) angeordnet ist und auf welche das Meßlichtbündel (12) geleitet ist, und

b) eine zu der ersten reflektierenden Fläche parallele, feststehende zweite reflektierende Fläche (58), auf welche das Meßlichtbündel (12) von der ersten reflektierenden Fläche (56) reflektiert wird.

7. Vorrichtung nach Anspruch 6, **dadurch gekennzeichnet, daß** der Schwinger (54) ein piezoelektrischer Schwinger ist, der mit einer periodischen Spannung erregbar ist.

8. Vorrichtung nach Anspruch 6, **dadurch gekennzeichnet, daß** der Schwinger ein magnetostriktiver Schwinger (60) ist.

9. Vorrichtung nach Anspruch 8, **dadurch gekennzeichnet, daß** auf den Schwinger (60) ein amplitudenverstärkender, sich verjüngender Körper (66) aufgesetzt ist, dessen schmale Stirnfläche die erste reflektierende Fläche trägt.

10. Vorrichtung nach Anspruch 2, **dadurch gekennzeichnet, daß** die Mittel (14) zur Erzeugung einer Änderungsrate der optischen Weglänge

a) eine feststehende reflektierende Fläche (80),

b) eine zu der feststehenden reflektierenden Fläche (80) parallele Membran (76), die mit einer der feststehenden reflektierenden Fläche zugewandten Verspiegelung (82) versehen ist, und

c) Erregermittel zur Erzeugung elektrostatischer Wechselkräfte zwischen reflektierender Fläche (80) und Membran (82) aufweisen, wobei

d) das Meßlichtbündel (12) zwischen der reflektierenden Fläche (80) und der Verspiegelung (82) der Membran (76) mehrfach reflektiert wird.

11. Vorrichtung nach Anspruch 10, **dadurch gekennzeichnet, daß** die Erregermittel

a) eine erste Kondensatorplatte (78) enthalten, welche die feststehende, reflektierende Fläche (80) trägt, sowie

b) eine zweite Kondensatorplatte (84), die auf der der ersten Kondensatorplatte (78) abgewandten Seite der Membran (76) angeordnet ist, und

c) einen Gegentakttransformator (88), dessen Enden mit den Kondensatorplatten (78, 84) und dessen Mittelanzapfung (90) mit der Membran (76) verbunden ist.

12. Vorrichtung nach Anspruch 2, **dadurch gekennzeichnet, daß** die bewegliche reflektierende Fläche von einem elektrisch leitenden, verspiegelten Band (92) gebildet ist, das von einem Wechselstrom durchflossen und zwischen den Polen eines Magneten (98) angeordnet ist.

13. Vorrichtung nach einem der Ansprüche 10 bis 12, **dadurch gekennzeichnet, daß** die feststehenden und beweglichen reflektierenden Flächen mit Erregermitteln für die letztere in einem evakuierten Gehäuse (70) angeordnet sind, das mit Fenstern (72, 74) für den Durchtritt des Meßlichtbündels (12, 16) versehen ist.

14. Vorrichtung nach Anspruch 2, **dadurch gekennzeichnet, daß**

a) die Mittel zur Erzeugung einer Änderungsrate der optischen Weglänge

– einen feststehenden Spiegelträger (114) und

– einen relativ zu dem feststehenden Spiegelträger umlaufenden Spiegelträger (116) enthalten.

b) die Spiegelträger (114, 116) reflektierende Flächen (132, 134 bzw. 124, 126) aufweisen, wobei das Meßlichtbündel (12) über die reflektierenden Flächen des umlaufenden und des feststehenden Spiegelträgers (116, 114) geleitet ist,

c) die reflektierenden Flächen (132, 134, 124, 126) so angeordnet sind, daß während des Umlaufs das Meßlichtbündel (12) periodisch

– während erster Zeitintervalle eine Änderungsrate der optischen Weglänge erfährt und

– während zweiter Zeitintervalle unbeeinflußt durchgelassen wird.

15. Vorrichtung nach Anspruch 14, **dadurch gekennzeichnet, daß**

a) das Meßlichtbündel (12) parallel zur Umlaufachse (118) des umlaufenden Spiegelträgers (116) einfällt,

b) der umlaufende Spiegelträger (116) eine langgestreckt zylindrische Grundform besitzt,

c) auf dem Umfang des umlaufenden Spiegelträgers (116) als bewegliche reflektierende Flächen eine Mehrzahl Spiegelfolgen (120) angeordnet sind,

– die sich jede längs einer Mantellinie des Zylinders (122) erstrecken,
– die in Umfangsrichtung im Abstand voneinander angeordnet sind,
– von denen jede aus einer Mehrzahl von Spiegeln (124, 126) besteht, die sich aneinander anschließen und die abwechselnd einen Winkel von 45° und 225° mit der Mantellinie bilden,

d) der feststehende Spiegelträger (114) als feststehende reflektierende Flächen eine Spiegelfolge (128) aufweist,
– die sich längs einer parallel zu der Umlaufachse (118) des umlaufenden Spiegelträgers (116) verlaufenden gedachten Linie (130) erstreckt,
– die aus einer Mehrzahl von Spiegeln (132, 134) besteht, die sich aneinander anschließen und die abwechselnd einen Winkel von 45° und 225° mit der besagten gedachten Linie (130) bilden,

e) das Meßlichtbündel (12)
– während der ersten Zeitintervalle von einem ersten Spiegel (124) einer Spiegelfolge (120) des umlaufenden Spiegelträgers (116) auf einen Spiegel (132) des feststehenden Spiegelträgers (114) reflektiert wird, dann abwechselnd je zwei Reflexionen an Spiegeln des feststehenden und des umlaufenden Spiegelträgers (114 bzw. 116) erfährt und schließlich von einem letzten Spiegel (126) der Spiegelfolge (120) des umlaufenden Spiegelträgers (116) in eine zur Umlaufachse (118) parallele Richtung ausgespiegelt wird und
– während der zweiten Zeitintervalle das Meßlichtbündel (12) zwischen den Spiegelfolgen (120) des umlaufenden Spiegelträgers (116) gerade hindurchgeht.

16. Vorrichtung nach Anspruch 2, **dadurch gekennzeichnet, daß**

a) ein feststehender Spiegelträger (102) feststehende reflektierende Flächen (108, 110) aufweist, die einen rechten Winkel miteinander bilden,

b) ein beweglicher Spiegelträger (100) bewegliche reflektierende Flächen (104, 106) aufweist, die den feststehenden reflektierenden Flächen (108, 110) zugewandt sind und einen Winkel von 270° miteinander bilden,

c) das Meßstrahlenbündel (12) abwechselnd zweimal an reflektierenden Flächen (106, 104) des beweglichen und zweimal an reflektierenden Flächen (108, 110) des feststehenden Spiegelträgers (102) reflektiert wird und

d) der bewegliche Spiegelträger (100) zu Schwingungen relativ zu dem feststehenden Spiegelträger (102) anregbar ist.

**Claims**

1. Device for measuring atomic absorption spectra in order to determine the quantity of a looked-for element, the atoms of which absorb in a narrow spectral range (absorption line), in a sample, comprising

(a) an atomizing device for atomizing the sample in a sample area such that the looked-for element is present in atomic state in this sample area (18),

(b) a line emitting light source (10) for providing a measuring light beam having a narrow-band wavelength profile as compared to the width of the absorption line and the wavelength of which is at least in the proximity of the absorption line,

(c) means for passing this measuring light beam through the sample area (18),

(d) a detector (20) which is exposed to the measuring light beam, the intensity of which at the detector is a function of the absorption to which the measuring light beam is subjected in the sample area (18), and which supplies a corresponding measuring signal,

(e) frequency modulating means (14) for frequency modulation of the measuring light beam passing through the sample space (18) by utilization of Doppler's effect such that the overlap of the wavelength profiles of the measuring light beam and of the absorption line is varied, and

(f) signal processing means (26, 28) for generating a background-compensated measuring value for said quantity of the looked-for element from the varied measuring signal obtained with the frequency modulation, characterized in that

(g) the frequency modulating means comprise means (14) for providing a periodical rate of variation of the optical path length, which are arranged between the line emitting light source (10) and the sample area (14) and which cause a variation of the wavelength of the measuring light beam proportional to said rete of variation,

(h) the rate of variation causing a continuous variation of the position of the wavelenght profile of the measuring light beam with respect to the position of the absorption line over a scanning range clearly exceeding the width of the absorption line such that a background spectrum is determined over a defined band width beside the absorption line, and

(i) the signal processing means comprise means for correcting the measurement in the range of the absorption line by a background measuring value obtained from the background absorption spectrum.

2. Device as set forth in claim 1, characterized in that the means (14) for providing a rate of variation of the optical wavelength comprise at least one movable reflective surface (58, 68, 82, 92, 104, 124, 126).

3. Device as set forth in claim 1, characterized in that the means for providing a rate of variation of the optical wavelength comprise

   a) an optical material (132) arranged in the path of rays of the measuring light beam (12) and transparent for the measuring light beam and having a refraction index controllable by an applied control signal, and

   b) means (134, 136) for applying a cyclic control signal to this material (132).

4. Device as set forth in claim 3, characterized in that the refraction index of the material (132) is variable by an applied signal.

5. Device as set forth in claim 4, characterized in that the path of rays of the measuring light beam is passed several times through the material (132) by mirrors (142, 140) arranged on the incident and on the emergent side of the material (132) having variable refraction index.

6. Device as set forth in claim 2, characterized in that the means for providing a rate of variation of the optical wavelength comprise

   a) a first reflective surface (56) which is arranged on the front surface of an oscillator (54) and onto which the measuring light beam (12) is directed, and

   b) a stationary second reflective surface (58) which is parallel with the first reflective surface and onto which the measuring light beam (12) is reflected by the first reflective surface (56).

7. Device as set forth in claim 6, characterized in that the oscillator (54) is a piezoelectric oscillator which is adapted to be excited by a cyclic voltage.

8. Device as set forth in claim 6, characterized in that the oscillator is a magnetorestrictive oscillator (60).

9. Device as set forth in claim 8, characterized in that an amplitude-amplifying body (66) is placed on the oscillator (60), the narrow front surface of said body carrying the first reflective surface.

10. Device as set forth in claim 2, characterized in that the means (14) for providing a rate of variation of the optical wavelength have

   a) a stationary reflective surface (80),

   b) a diaphragm (76) which is parallel with the stationary reflective surface (80) and provided with a metallization (82) facing the stationary reflective surface, and

   c) excitation means for generating electrostatic alternating forces between the reflective surface (80) and the diaphragm (82),

   d) the measuring light beam (12) being reflected several times between the reflective surface (80) and the metallization (82) of the diaphragm (76).

11. Device as set forth in claim 10, characterized in that the excitation means comprise

   a) a first capacitor plate (78) which carries the stationary reflective surface (80),

   b) a second capacitor plate (84) which is arranged on the side of the diaphragm (76) remote from the first capacitor plate (78), and

   c) a push-pull transformer (88), the ends of which are connected to the capacitor plates (78, 84) and the mid connection (90) of which is connected to the diaphragm (76).

12. Device as set forth in claim 2, characterized in that the movable reflective surface is formed by an electical conductive metallized band (92) through which an a.c. current flows and which is arranged between the poles of a magnet (98).

13. Device as set forth in any one of the claims 10 to 12, characterized in that the stationary and movable reflective surfaces with excitation means for the latter are arranged in an evacuated housing (70) which is provided with windows (72, 74) for the passage of the measuring light beam (12, 16) therethrough.

14. Device as set forth in claim 2, characterized in that

   a) the means for providing a rate of variation of the optical wavelength comprise
   – a stationary mirror carrier (114) and
   – a mirror carrier (116) which rotates relative to the stationary mirror carrier,

   b) the mirror carriers (114, 116) have reflective surfaces (132, 134 and 124, 126, respectively), with the measuring light beam (12) being guided over the reflective surfaces of the rotating and of the stationary mirror carriers (116, 114),

   c) the reflective surfaces (132, 134, 124, 126) are arranged such that, during the rotation, the measuring light beam (12) periodically
   – is subjected to a rate of variation of the optical path length during first time intervals and
   – is transmitted in an unaffected manner during second time intervals.

15. Device as set forth in claim 14, characterized in that

   a) the measuring light beam (12) is incident parallel with the axis of rotation (118) of the rotating mirror carrier (116),

   b) the rotating mirror carrier (116) has a generally longitudinally cylindrical shape,

   c) a plurality of mirror series (120) are arranged on the circumference of the rotating mirror carrier (116) as movable reflective surfaces,
   – each of which mirror series (120) extends along a generating line of the cylinder (122) and
   – which are spaced from each other in circumferential direction and
   – each of which consists of a plurality of mirrors (124, 126) which are connected to each other and which alternatingly form an angle of 45° and 225° with the peripheral line,

   d) the stationary mirror carrier (114) has a mirror series (128) as stationary reflective surfaces, which mirror series (128)

    – extends along a notional line (130) extending parallel with the axis of rotation (118) of the rotating mirror carrier (116) and

    – consists of a plurality of mirrors (132, 134) which are connected to each other and which alternatingly form angles of 45° and 225° with said notional line (130),

e) the measuring light beam (12),

    – during the first time intervals, is reflected onto a mirror (132) of the stationary mirror carrier (114) by a first mirror (124) of a mirror series (120) of the rotating mirror carrier (116), then is alternatingly subjected to two reflections each at mirrors of the stationary and of the rotating mirror carriers (114 and 116, respectively) and finally is reflected out in a direction parallel to the axis of rotation (118) by a last mirror (126) of the mirror series (120) of the rotating mirror carrier (116), and,

    – during the second time intervals, passes straight through between the mirror series (120) of the rotating mirror carrier (116).

16. Device as set forth in claim 2, characterized in that

a) a stationary mirror carrier (102) has stationary reflective surfaces (108, 110) which form right angles with each other,

b) a movable mirror carrier (100) has movable reflective surfaces (104, 106) which face the stationary reflective surfaces (108, 110) and form an angle of 270° with each other,

c) the measuring light beam (12) is alternatingly reflected twice at reflective surfaces (106, 104) of the movable mirror carrier (100) and twice at reflecitve surfaces (108, 110) of the stationary mirror carrier (102), and

d) the movable mirror carrier (100) is adapted to be excited to oscillations relative to the stationary mirror carrier (102).

## Revendications

1. Dispositif destiné à mesurer des spectres d'absorption atomique afin de déterminer la quantité d'un élément cherché dont les atomes absorbent dans un domaine spectral étroit (ligne d'absorption), dans un échantillon, comprenant

(a) un dispositif d'atomisation déstiné à atomiser l'échantillon dans un domaine d'échantillon de sorte que l'élément cherché est présent en état atomique dans ce domaine d'échantillon (18),

(b) une source lumineuse (10) émettant des lignes, déstinée à engendrer un faisceau lumineux de mesure ayant un profil de longueur d'ondes à bande étroite par rapport à la largeur de la ligne d'absorption, la longueur d'onde du profil de longueur d'onde étant au moins dans l'approximité de la ligne d'absorption,

(c) des moyens déstinés à guider ce faisceau lumineux de mesure par le domaine d'échantillon (18),

(d) un détecteur (20) auquel est appliqué le faisceau lumineux de mesure dont l'intensité au détecteur dépend de l'absorption à laquelle est soumise le faisceau lumineux de mesure dans le domaine d'échantillon (18), et qui fournit un signal de mesure correspondant,

(e) des moyens de modulation de fréquence (14) déstinés à la modulation de la fréquence du faisceau lumineux de mesure passant par l'espace d'échantillon (18) en utilisant l'effet Doppler, de sorte que le chevauchement des profils de longueur d'ondes du faisceau lumineux de mesure et de la ligne d'absorption est varié, et

(f) des moyens de traitement de signal (26, 28) déstinés à engendrer une valeur compensée du fond pour ladite quantité de l'élément cherché, du signal de mesure varié obtenu lors de la modulation de fréquence, caractérisé par le fait que

(g) les moyens de modulation de fréquence comprennent des moyens (14) disposés entre la source lumineuse (10) émettant des lignes et le domaine d'échantillon (18) et déstinés à engendrer un taux de variation périodique de la longueur de chemin optique provoquant une variation de longueur d'onde du faisceau lumineux de mesure, qui est proportionnelle à celui,

(h) le taux de variation provoquant une variation continuelle de la position du profil de longueur d'onde du faisceau lumineux de mesure relativement à la position de la ligne d'absorption par un domaine d'exploration largement dépassant la largeur de la ligne d'absorption, de sorte que un spectre de fond est déterminé par une largeur de bande définie à côté de la ligne d'absorption, et que

(i) les moyens de traitement de signal comprennent des moyens déstinés à corriger la mesure dans le domaine de la ligne d'absorption, d'un valeur de fond obtenue du spectre d'absorption de fond.

2. Dispositif selon la revendication 1, caractérisé par le fait que les moyens (14) déstinés à engendrer un taux de variation de la longueur de chemin optique comprennent au moins une surface mobile reflétante (56, 68, 82, 92, 104, 124, 126).

3. Dispositif selon la revendication 1, caractérisé par le fait que les moyens déstinés à engendrer un taux de variation de la longueur de chemin optique comprennent

(a) une matière optique (132) transparente pour le faisceau lumineux de mesure et disposée dans la marche des rayons du faisceau lumineux (12) et ayant une indice de refraction commandable par un signal de commande appliqué, et

(b) des moyens (134, 136) déstinés à appliquer un signal de commande périodique à cette matière (132).

4. Dispositif selon la revendication 3, caractérisé par le fait que l'indice de refraction de la matière (132) est variable par un signal appliqué.

5. Dispositif selon la revendication 4, caractérisé par le fait que la marche des rayons du faisceau lumineux de mesure est guidée plusieurs fois par la matière (132) par un miroir (142, 140) disposé du côté incident et du coté émergant de la matière (132) à indice de refraction variable.

6. Dispositif selon la revendication 2, caractérisé par le fait que les moyens déstinés à engendrer un taux de variation de la longueur de chemin optique comprennent

(a) une première surface reflétante (56) disposée sur la surface frontale d'un oscillateur (54) et sur laquelle est guidé le faisceau lumineux de mesure (12), et

(b) une seconde surface reflétante (58) stationnaire parallèle à la première surface reflétante, sur laquelle est reflété le faisceau lumineux de mesure (12) de la première surface reflétante (56).

7. Dispositif selon la revendication 6, caractérisé par le fait que l'oscillateur (54) est un oscillateur piézoélectrique qui peut être excité par une tension périodique.

8. Dispositif selon la revendication 6, caractérisé par le fait que l'oscillateur est un oscillateur magnétostrictif (60).

9. Dispositif selon la revendication 8, caractérisé par le fait qu'un corps cônique (66) amplifiant l'amplitude est placé sur l'oscillateur (60), dont la surface frontale étroite porte la première surface reflétante.

10. Dispositif selon la revendication 2, caractérisé par le fait que les moyens (14) déstinés à engendrer un taux de variation de la longueur de chemin optique présentent

(a) une surface reflétante stationnaire (80),

(b) un diaphragme (76) parallèle à la surface reflétante stationnaire (80), qui est muni d'un dépôt de couches réfléchissantes (82) en face de la surface reflétante stationnaire, et

(c) des moyens d'excitation déstinés à engendrer des forces alternantes électrostatiques entre la surface reflétante (80) et le diaphragme (82),

(d) le faisceau lumineux de mesure (12) étant reflété plusieurs fois entre la surface reflétante (80) et le dépôt de couches réfléchissantes (82) du diaphragme (76).

11. Dispositif selon la revendication 10, caractérisé par le fait que les moyens d'excitation comprennent

(a) une première plaque de condensateur (78) portant la surface reflétante stationnaire (80), ainsi que

(b) une seconde plaque de condensateur (84) disposée du côté opposé à la première plaque de condensateur (78) du diaphragme, et

(c) un transformateur push-pull (88) dont les extrémités sont reliées aux plaques de condensateur (78, 84) et dont la prise centrale (90) est reliée au diaphragme (76).

12. Dispositif selon la revendication 2, caractérisé par le fait que la surface mobile reflétante est formée par une bande métallisée (92) électriquement conductive par laquelle passe un courant alternant et disposée entre les pôles d'un aimant (98).

13. Dispositif selon l'une des revendications 10 à 12, caractérisé par le fait que les surfaces stationnaires et mobiles reflétantes sont disposées avec des moyens d'incitation pour la dernière dans un boîtier évacué (70) muni de fenêtres (72, 74) pour le passage du faisceau lumineux (12, 16).

14. Dispositif selon la revendication 2, caractérisé par le fait que

(a) les moyens déstinés à engendrer un taux de variation de la longueur de chemin optique comprennent

– un support de miroir stationnaire (114), et

– un support de miroir (116) rotatif relativement au support de miroir stationnaire.

b) les supports de miroir (114, 116) ont des surfaces reflétantes (132, 134 et 124, 126, respectivement), le faisceau lumineux de mesure (12) étant guidé sur les surfaces reflétantes du support de miroir stationnaire et rotatif (116, 114),

(c) les surfaces reflétantes (132, 134, 124, 126) sont disposées de sorte que le faisceau lumineux (12) est periodiquement

– soumis à un taux de variation de la longueur de chemin optique lors de premiers intervalles, et

– laissé passé de manière non-influencée lors de seconds intervalles.

15. Dispositif selon la revendication 14, caractérisé par le fait que

a) le faisceau lumineux de mesure (12) fait incidence parallèlement à l'axe de rotation (118) du support de miroir rotatif (116),

b) le support de miroir rotatif (116) a une forme de base longitudinale cylindrique,

c) plusieurs séries de miroirs (120) sont disposées comme surfaces mobiles reflétantes sur la circonférence du support de miroir rotatif (116),

– qui s'étendent chacune le long d'une génératrice du cylindre (122),

– qui sont disposées avec espacement l'une de l'autre en direction circonférentielle,

– dont chacune est constituée de plusieurs miroirs (124, 126) faisant suite l'un à l'autre et formant alternativement un angle de 45° et 225° avec la génératrice,

d) le support de miroir stationnaire (114) a comme surfaces reflétantes une série de miroirs (128),

— qui s'étend le long d'une ligne imaginaire (130) s'étendant parallèlement à l'axe de rotation (118) du support de miroir rotatif (116),

— qui est constituée de plusieurs miroirs (132, 134) faisant suite l'un à l'autre et formant alternativement un angle de 45 et de 225 avec ladite lignie imaginaire (130),

e) le faisceau lumineux de mesure (12)

— est reflété lors des premiers intervalles par un premier miroir (124) d'une série de miroirs (120) du support de miroir rotatif (116) sur un miroir (132) du support de miroir stationnaire (114), est ensuite soumis alternativement à deux reflexions sur des miroirs du support de miroir stationnaire (114) et du support de miroir rotatif (116), respectivement, et est enfin sorti par reflexion par un dernier miroir (126) de la série de miroirs (120) du support de miroir rotatif (116) dans une direction parallèle à l'axe de roatation (118), et

— lors des seconds intervalles, le faisceau lumineux de mesure (12) passe tout droite entre les séries de miroirs (120) du support de miroir rotatif (116).

16. Dispositif selon la revendication 2, caractérisé par le fait que

a) un support de miroir stationnaire (102) a des surfaces reflétantes stationnaires (108, 110) formant un angle droit l'une avec l'autre,

b) un support de miroir mobile (100) a des surfaces reflétantes mobiles (104, 106) en face des surfaces reflétantes stationnaires (108, 110) et formant un angle de 270° l'une avec l'autre,

c) le faisceau lumineux de mesure (12) est alternativement reflété deux fois aux surfaces reflétantes (106, 104) du support de miroir mobile et deux fois aux surfaces reflétantes (108, 110) du support de miroir stationnaire (102), et

d) le support de miroir mobile (100) peut être excité à des oscillations relativement au support de miroir stationnaire (102).

Fig.1

Fig.2

*Fig.3*

*Fig.4*

**Fig.5**

**Fig.6**

**Fig.7**

**Fig.11**

Fig.9

Fig.10

Fig.8